# EUROPEAN PATENT APPLICATION

(11) **EP 1 020 323 A2**
(43) Date of publication of application: **19.07.2000**
(21) Application number: 00100671.7
(22) Date of filing: 13.01.2000
(51) Int. Cl.: B60N 2/48

(54) **Headrest for a vehicle**

(30) Priority: 15.01.1999 IT TO990030
(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (IT)
(74) Representative: Jorio, Paolo

(57) **Abstract**

A headrest (1) for a vehicle seat (3) has a cushion body (4) having a supporting portion (12) for the user's head; and two rods (28), which are connected integrally to the cushion body (4), are housed inside the supporting portion (12), and slide inside respective guides (27) to enable the cushion body (4) to move between a raised position, and lowered position in which the supporting portion (12) is positioned facing the seatback.

## Description

The present invention relates to a headrest for a vehicle seat.

More specifically, the present invention relates to a headrest of the type comprising a cushion body substantially in the form of an upside down L and in turn comprising a top connecting portion extending, in use, substantially horizontally and facing a surface defining the top of the backrest of the relative seat, and a substantially vertical front supporting portion extending from a front end of the connecting portion towards the seat portion of the seat to define a support for the user's head.

Known cushion bodies of the type described above are normally connected to the backrest by a pair of rods, which slide inside respective guides to move the cushion body between a raised position, and a lowered position in which the supporting portion faces a supporting surface of the backrest. Since the connecting portion is normally much thinner than on normal headrests, it is practically impossible for the guides in which the respective rods slide to be formed in the connecting portion. The reason being that the guides would be much shorter than on conventional headrests, thus limiting the height adjustment travel of the headrest, on the one hand, and impairing the stability, reliability and efficiency of the headrest, on the other.

For these reasons, the rods are connected integrally to the connecting portion and connected to the backrest of the seat so as to slide inside respective seats on the backrest.

Though solving the problems referred to above, such an arrangement poses several difficulties, all due to the presence of connecting rods sliding inside the backrest. In such cases, in fact, when the headrest is fitted to a front seat of the vehicle, the backrest of the seat must be provided with guards or panels to protect the legs of the passenger in the rear seat and prevent interference between the rods and the passenger's legs in the event of an accident or simply when adjusting the height of the cushion body. Such guards are particularly indispensable in the case of relatively thin backrests, and when the cushion body is adjusted practically vertically, so that the rods normally form an angle of other than zero with the backrest, and the bottom ends of the rods move towards the rear-seat passenger's legs as the cushion body is shifted into the lowered position.

The presence of sliding rods inside the backrest also makes it difficult to fit the headrest to the rear seats, particularly those with three headrests and an intermediate armrest. In which case, the rods of the middle headrest interfere with the mechanisms of the intermediate armrest. To prevent this, the armrest is either dispensed with or shorter rods used, thus reducing the height adjustment travel of the middle cushion body, which, not being adjustable to the same maximum height as the lateral cushion bodies, falls short of the very function for which it is designed.

It is an object of the present invention to provide a vehicle seat headrest designed to solve the aforementioned problems in a straightforward, low-cost manner.

According to the present invention, there is provided a headrest for a vehicle, in particular a motor vehicle, seat, comprising a cushion body in turn comprising at least one supporting portion for the user's head; and connecting means for connecting said cushion body to a backrest of said seat; said connecting means comprising guide means connected to said backrest; and slide means carried by said cushion body and connected to said guide means to enable said cushion body to move between a raised position, and a lowered position in which said supporting portion extends facing a front supporting surface of said backrest; characterized in that at least said slide means are substantially housed in said supporting portion of said cushion body.

Preferably, the guide means of the headrest defined above are substantially housed in said supporting portion.

A non-limiting embodiment of the present invention will be described by way of example with reference to the accompanying drawings, in which:
Figure 1 shows a section of a preferred embodiment of the headrest according to the present invention, as fitted to a vehicle seat;
Figure 2 shows a larger-scale view, as in Figure 1, of the Figure 1 headrest in a different operating position;
Figures 3 and 4 show smaller-scale sections, with parts removed for clarity, along lines III-III and IV-IV respectively in Figure 2;
Figure 5 shows the same view as in Figure 1, of a variation of a detail in Figure 1.

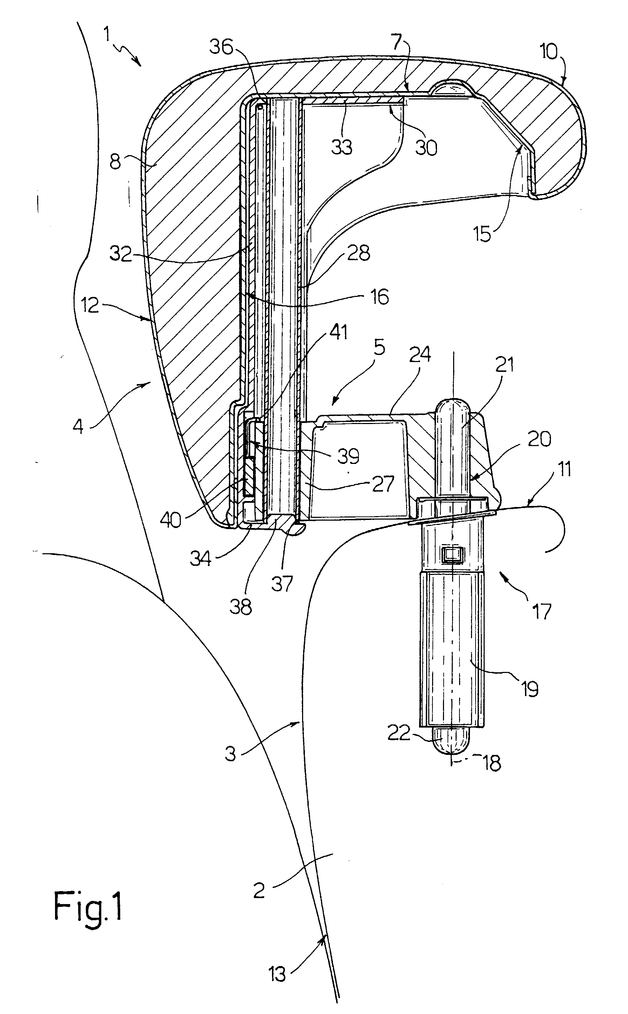

Number 1 in Figure 1 indicates a headrest fitted to a seatback 2 of a seat 3 of a vehicle (not shown), in particular a motor vehicle.

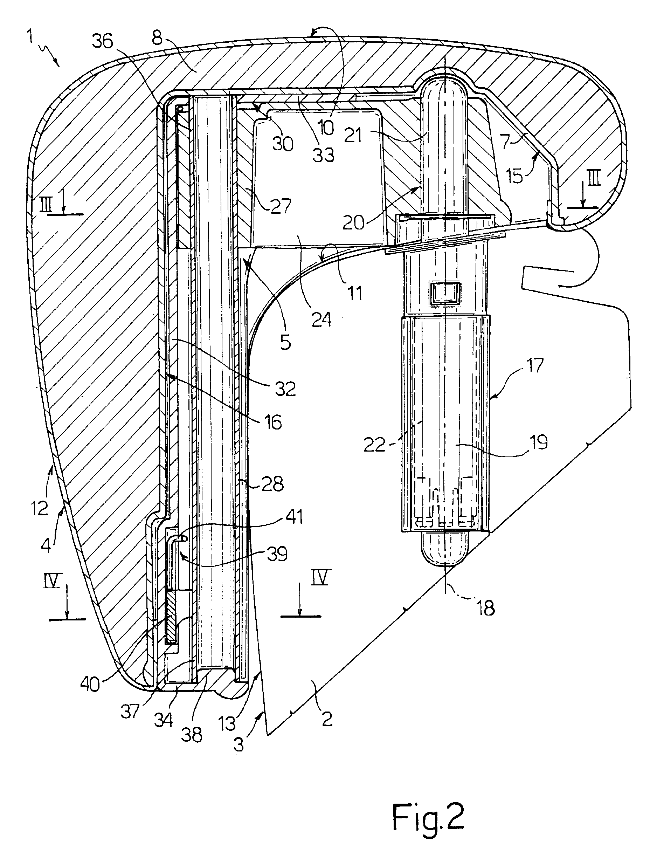

As shown in Figures 1 and 2, headrest 1 comprises a cushion body 4; and a connecting assembly 5 for connecting body 4 to seatback 2 in such a manner as to permit a height adjustment of the body between a maximum raised position, shown in Figure 1, and a maximum lowered position, shown in Figure 2.

Cushion body 4 comprises a reinforcing frame 7 and an outer layer 8 covering frame 7, is shaped in the form of an upside down L, and has a top portion 10 extending facing a surface 11 defining the top of backrest 2, and a front supporting or rest portion 12 for the user's head. Front portion 12 extends towards the seat portion (not shown) of seat 3 from a front end of top portion 10, and is so shaped as to be positioned contacting the supporting surface 13 of backrest 2 when cushion body 4 is in the lowered position. Portions 10 and 12 have respective cavities 15 and 16 partly defined by reinforcing frame 7, communicating with each other, and partly housing connecting assembly 5.

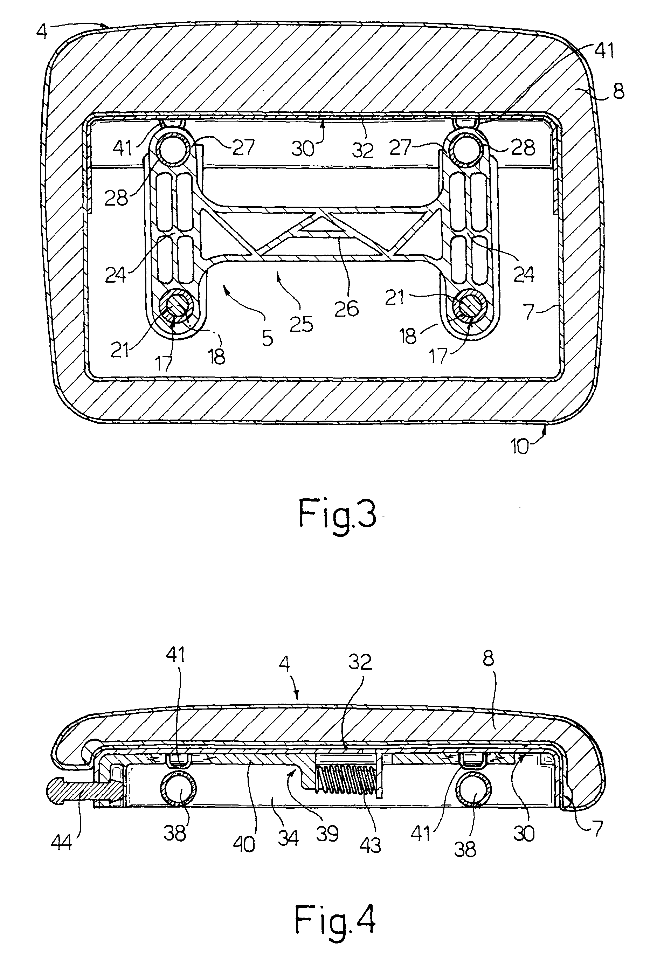

Assembly 5 comprises two known fastening members 17 (Figures 1-3) spaced transversely and extending inside backrest 2 through respective openings in surface 11, and along respective parallel, substantially vertical axes 18 (Figures 1 and 2). More specifically, each of members 17 comprises a retaining bush 19 inserted in a fixed position inside backrest 2 through surface 11; and an anchoring pin 20. Each anchoring pin 20 comprises two opposite end portions 21 and 22; portion 22 extends, and is locked releasably in known manner, inside relative bush 19; and portion 21 projects upwards and outwards of bush 19 and backrest 2. From each portion 21, there projects a respective supporting arm 24 forming part of a monolithic, substantially H-shaped structural member 25 (Figure 3), which is formed in one piece of plastic material, comprises a cross member 26 connecting arms 24 to each other, and forms part of assembly 5.

With reference to Figures 1 to 3, each arm 24 is connected integrally, at the free end opposite the end fastened to seat 2, to a respective cylindrical tubular guide 27, which extends parallel to axes 18 in a forward position with respect to supporting surface 13 of backrest 2 and inside cavity 16.

Guides 27 form part of assembly 5 and are engaged in axially sliding manner by respective slides also forming part of assembly 5 and each defined by a respective tubular metal rod 28. Each rod 28 extends parallel to axes 18 and to the other rod 28 inside cavity 16 and along substantially the whole length of portion 12, and is connected integrally to a supporting frame 30, which is common to rods 28, extends in contact with frame 7, and is connected integrally to frame 7 preferably by means of a number of click-on fastening members (not shown). More specifically, frame 30 comprises a first and a second wall 32 and 33 substantially perpendicular to each other and extending inside cavities 16 and 15 respectively; and wall 32 is connected integrally, at an end portion opposite the portion connected to wall 33, to a further wall 34 facing wall 33. Rods 28 extend adjacent to wall 32 and between walls 33 and 34, and each have an end portion 36 forced inside a respective hole formed in wall 33, and an opposite end portion 37 resting on wall 34 and engaged by a locating projection 38 carried by wall 34.

With reference to Figures 1 to 3, and particularly Figure 4, assembly 5 also comprises a releasable device 39 for axially locking cushion body 4 in the raised position, and which comprises a cursor 40, and two retaining projections 41 connected integrally to cursor 40. Cursor 40 is connected to frame 30 so as to slide in opposite directions perpendicularly to rods 28, is maintained in a work position (Figure 1) - in which each projection 41 rests against an axial mating surface of relative guide 27 - by the action of a contrast spring 43 (Figure 4), and is movable manually, by means of a pushbutton 44 carried by cursor 40 itself, into a release position permitting free movement of rods 28 inside guides 27.

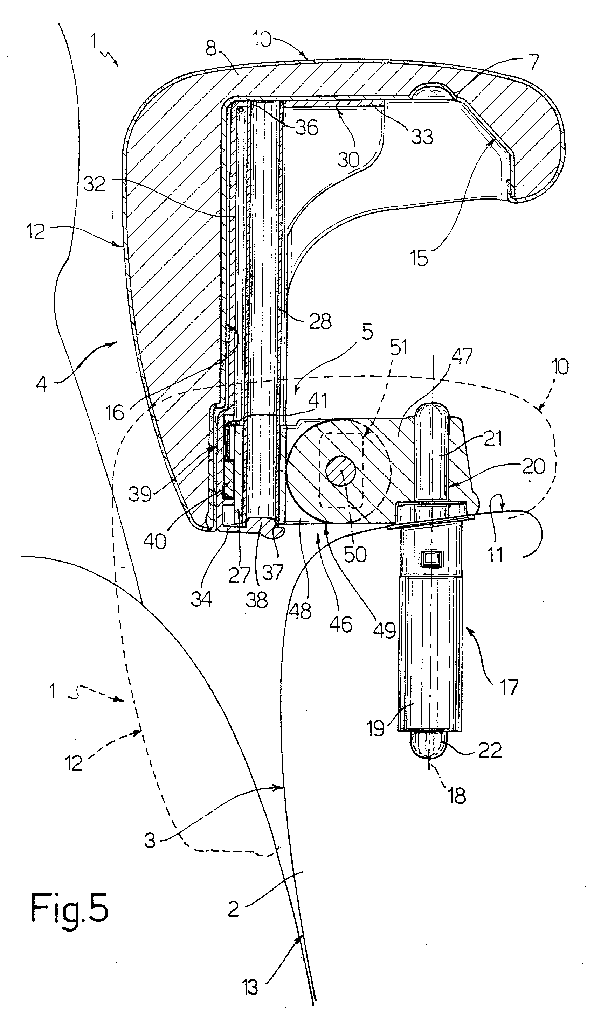

In the Figure 5 variation, monolithic H-shaped member 25 is replaced by an articulated member 46 comprising a fixed portion 47 connected integrally to backrest 2 by members 17, and a movable second portion 48. Movable portion 48 is connected integrally to guides 27, and is connected to fixed portion 47 by a known hinge 49 (not described in detail) having a hinge axis 50 perpendicular to axes 18 and to rods 28, and permitting adjustment of the position of rods 28, and hence of cushion body 4, with respect to backrest 2 about axis 50. Hinge 49 is preferably provided with a known retaining assembly 51 (not described in detail), which can be excluded manually by means of a pushbutton (not shown) and, in the absence of external control, retains cushion body 4 in any angular position about axis 50.

The design characteristics of headrest 1 therefore clearly provide a straightforward answer to the problems typically associated with known solutions. In the case of headrest 1 described, in fact, rods 28 extend entirely outside backrest 2 of the seat and entirely inside supporting portion 12, thus preventing rods 28 from interfering with the rear passengers' legs, when headrest 1 is fitted to a front seat, or with any intermediate armrests, when headrest 1 is fitted to a rear seat. In the latter case, the rear seat may therefore be fitted with one or more movable armrests, and three perfectly identical headrests in terms of design and efficiency.

Moreover, hinge 49 between fastening members 17 and guides 27 enables the position of cushion body 4 to be adjusted about a substantially horizontal axis perpendicular to rods 28, and independently of the vertical position adjustment of cushion body 4.

Clearly, changes may be made to headrest 1 as described herein without, however, departing from the scope of the present invention.

In particular, guides 27 of headrest 1 described may be formed differently from those described by way of example, and may be located entirely or partly outside cushion body 4; rods 28 may be replaced by slides having different cross sections and/or connected to the cushion body differently from those described by way of example, and may be only partly housed inside cushion body 4; and, similarly, member 25 and/or member 46 may be formed differently and connected to backrest 2 differently from those described.

## Claims

1. A headrest (1) for a vehicle, in particular a motor vehicle, seat (3), comprising a cushion body (4) in turn comprising at least one supporting portion (12) for the user's head; and connecting means (5) for connecting said cushion body (4) to a backrest (2) of said seat; said connecting means (5) comprising guide means (27) connected to said backrest (2); and slide means (28) carried by said cushion body (4) and connected to said guide means (27) to enable said cushion body (4) to move between a raised position, and a lowered position in which said supporting portion (12) extends facing a front supporting surface (13) of said backrest (2); characterized in that at least said slide means (28) are substantially housed in said supporting portion (12) of said cushion body (4).

2. A headrest as claimed in Claim 1, characterized in that said guide means (27) are substantially housed in said supporting portion (12).

3. A headrest as claimed in Claim 1 or 2, characterized in that said guide means comprise two parallel guides (27); and said slide means comprise two rods (28), each engaging a respective said guide (27) in sliding manner, and each substantially the same length as said supporting portion (12) measured in the same extension direction as the rods (28).

4. A headrest as claimed in Claim 3, characterized in that said connecting means (5) comprise a rigid frame (30); said rods (28) having respective opposite end portions (36)(37) connected integrally to said rigid frame (30).

5. A headrest as claimed in Claim 4, characterized in that said rods (28) are tubular rods; and said rigid frame (30) comprises, for each of said rods (28), a hole engaged by a first (36) of said end portions (36)(37), and a locating projection (38) extending inside a second (37) of said end portions.

6. A headrest as claimed in any one of Claims 3 to 5, characterized by comprising releasable axial locking means (39) which rest on said guides (27) to retain said cushion body (4) in said raised position.

7. A headrest as claimed in any one of Claims 3 to 6, characterized in that said connecting means (5) also comprise fastening means (17) connected to said backrest (2) in a fixed position; and spacing means (24; 46) interposed between said fastening means (17) and said guide means (27).

8. A headrest as claimed in Claim 7, characterized in that said spacing means comprise, for each said rod (28), a respective rigid arm (24) projecting from said fastening means (17).

9. A headrest as claimed in Claim 8, characterized by comprising further connecting means (26) for rigidly connecting said supporting rigid arms (24) to each other.

10. A headrest as claimed in Claim 9, characterized in that said arms (24) and said further connecting means (26) are defined by an H-shaped member (25) formed in one piece.

11. A headrest as claimed in one of Claims 8 to 10, characterized in that said fastening means (17) comprise, for each said arm (24), a respective fixed fastening pin (20) extending parallel to the respective said rod (28); and releasable connecting means for connecting said pin (20) to said backrest (2).

12. A headrest as claimed in any one of Claims 7 to 11, characterized in that said connecting means (5) also comprise hinge means (46) for permitting rotation of said supporting portion (12) with respect to said fastening means (17) about a hinge axis (50) perpendicular to said rods (28).

13. A headrest as claimed in Claim 12, characterized in that said hinge means (46) are interposed between said fastening means (17) and said guides (27).

14. A headrest as claimed in Claim 12 or 13, characterized by comprising releasable locking means (51) for retaining said supporting portion (12) in a number of angular positions about said hinge axis (50).
